# EUROPEAN PATENT APPLICATION

(11) **EP 3 487 030 A1**
(43) Date of publication of application: **22.05.2019**
(21) Application number: 17826876.9
(22) Date of filing: 23.06.2017
(51) Int. Cl.: H02J 7/00, H02J 50/10

(54) **OUTPUT DEVICE FOR WIRELESS CHARGING**

(30) Priority: 14.07.2016 CN 201610562106
(71) Applicant: Shenzhen Legislative Aloe Consulting Management Service Co., Ltd., Shenzhen City, Guangdong Province (CN)
(72) Inventor: XING, Yitao, Shenzhen Guangdong 518000 (CN)
(74) Representative: Rees, Kerry
(86) International application number: PCT/CN2017/089872
(87) International publication number: WO 2018/010538

(57) **Abstract**

An output device for wireless charging, relating to the field of wireless charging. The output device for wireless charging comprises an isolation transformer (12), a first numerical control switch unit (14), a wireless coil module (13), an information extraction unit (15), and a processor unit (16). The primary side of the isolation transformer is connected to a direct current input end. The first numerical control switch unit generates an alternating current on the primary side of the isolation transformer by means of connection and disconnection. The wireless coil module outputs alternating current electric energy needed for wireless charging. The information extraction unit is used for extracting current information on the isolation, filtering and regulation isolation transformer to obtain corresponding real-time information, and transmitting the real-time information to the processor unit. The processor unit obtains a control signal according to the real-time information and controls the first numerical control switch unit to work. In the output device for wireless charging, conventional modules having large volumes, high power consumption and high costs are removed, the circuit is simplified, the power loss is reduced, and the overall efficiency of the output device for wireless charging is improved; and meanwhile, costs are greatly reduced, and the product volume is reduced.

## Description

### Technical Field

The present invention relates to the field of wireless charging, and in particular to a output device for wireless charging .

### Background Art

The technical implementation of the wireless charging system includes a wireless charging output sub-module and a wireless charging input sub-module. The wireless charging output sub-module generates alternating current required for wireless charging, drives a wireless charging output coil module through the alternating current required for wireless charging to transmit alternating electromagnetic energy to a wireless charging input coil module, and then converts the induced alternating current into direct current, thereby supplying power to the equipment.

The specific implementation of the wireless charging output sub-module is generally divided into four parts: a power module, a low-frequency current transmission line, a wireless charging output circuit module, and a transmitting coil module, and the power supplies are classified into two types: one is power frequency alternating current, and the other is direct current that may have interference signals. The interference signals on the direct current include the high-voltage alternating current signal in a band of 10 Hz to 300 H_{Z} and the low-voltage alternating current signal in a band of 300 Hz to 10 Khz. The high-voltage alternating current signal in the band of 10 Hz to 300 H_{Z} makes the direct current supply voltage change greatly, thereby causing the wireless charging output to be unbalanced or failed. The low-voltage alternating current signal in the band of 300 Hz to 10 Khz interferes with the communication signal when the wireless charging system is working, thereby causing an abnormal communication or a failure in wireless charging.

The power module of the first type of wireless charging output sub-modules is generally a power adapter which converts power frequency alternating current into low-voltage direct current. The low-frequency current transmission line is a conventional electric line only suitable for conducting power direct current, and alternating current below 1 Khz, such as a USB cable. The wireless charging output circuit module includes a bridge inverter circuit controlled by a controller IC and composed of at least two controllable switches connected in series, wherein the sequence and time of switches are controlled by the controller IC to generate required alternating current at the electrical connection points of the two controllable switches connected in series. The transmitting coil module converts the alternating current generated by the wireless charging output circuit module into an alternating magnetic field. The wireless charging output circuit module and the transmitting coil module are generally installed in the same housing to form a wireless charging transmitter product, or in rare cases, installed in a set of housings which are divided into two or more parts but tightly mechanically connected to each other.

Firstly, the circuit system, in which the power adapter converts the power frequency alternating current into a low-voltage direct current, includes two high-loss circuits, namely a switch for inversion and a half-bridge rectifier for outputting low-voltage direct current, and the overall efficiency is generally not more than 90%.

Secondly, the circuit system, in which the wireless charging output circuit module converts the low-voltage direct current into alternating current for wireless charging, includes a numerical control bridge inverter circuit having a main parameter of loss, and the efficiency is generally not more than 90%.

Thus, if it is assumed that the power adapter has a working efficiency of 85%, and an efficiency in a process of transmitting the low-voltage direct current to the wireless charging receiving device by means of wireless charging is also about 85%, an efficiency of the entire wireless charging system is only 72.25%, which causes energy waste and generates a lot of heat.

In practice, a wireless charging output subsystem with an output of 5 W only generates heat of 2 W, and if it is updated to a wireless charging system with an output of 20 W, the generated heat can reach 12 W, or the housing temperature will be about 120°C, which is very dangerous.

When the output power of the output device for wireless charging is less than 5 W, the wireless charging transmitter product composed of the low-frequency current transmission line, the wireless charging output circuit module, and the transmitting coil module has a low cost of about 5 to 6 dollars. However, when the output power is increased to 20 W, the cost of the wireless charging transmitter product will reach 20 dollars. Since the power adapter with an output of 5 W has a cost of 1 dollar, and the power adapter with an output of 20 W has a cost of 2 dollars, if the wireless charging output sub-module is implemented with the prior art, the high-power wireless charging system cannot be promoted due to the high cost.

The wireless charging output sub-module generates a large amount of heat, which causes the wireless charging receiving device such as the mobile phone to be crashed or damaged. Thus, for a wireless charger implemented in the traditional way, in order to achieve medium-and-high output power and low temperature, it is inevitable to increase the volume and heat dissipation surface area, add a cooling fan, isolate the heat source, etc., thereby leading to a very large product volume and a significant increase in the cost of mechanical structural parts, which is adverse to the production and transportation. Therefore, in order to popularize the first type of medium-and-high power wireless charging systems, it is necessary to solve the problems of efficiency, volume and cost of the wireless charging output sub-module.

The power module of the second type of wireless charging output sub-modules is generally a direct current/direct current power circuit, and its function is to convert the input fluctuant direct current into ideal noiseless constant-voltage direct current. The second type of wireless charging output sub-modules are generally used in large-capacity battery-powered occasions, such as in automobiles.

However, the efficiency of the direct current/direct current power circuit is generally only about 90%, and an enormous amount of heat will also be generated when large-power wireless charging energy is output. In addition, as the quality of the direct current/direct current power is improved, the cost and volume are increased.

Meanwhile, when the bridge inverter circuit included in the traditional wireless charging output circuit module is working, in order to improve the efficiency and reduce the heat, it is required that the time for the controllable switches connected in series to be simultaneously turned off should be as short as possible - generally 50 to 300 ns according to the actual situation; in other words, an interference signal of about 1.6 to 10 Mhz will be generated, and then transmitted to the power supply through the direct current/direct current power circuit, thereby affecting other devices mounted on the same power supply. In the automobile, the data communication frequency of the CAN bus is generally 1 to 10 Mhz, which is just easily affected by the interference signal of such power type to cause serious consequences such as brake failure, control failure, etc. Especially in a bus, the risk is even higher because each seat should be laid with one output device for wireless charging .

Therefore, in order to popularize the second type of medium-and-high power wireless charging systems, it is necessary to solve the problems of efficiency, cost, external interference resistance and generation of super interferences for the wireless charging output sub-module.

### Summary of the Invention

### Technical problem

In view of the above defects of the prior art, the technical problem to be solved by the present invention is to provide a output device for wireless charging , so as to solve the issues of efficiency, volume and cost of the first type of wireless charging output sub-modules, and the issues of efficiency, cost, external interference resistance and generation of signal interference of the second type of wireless charging output sub-modules.

### Solutions for the problem

### Technical solutions

The present invention employs the following technical solutions to solve the technical problem: there is provided a output device for wireless charging , comprising:
a direct current input end;
an isolation transformer having a primary side connected to the direct current input end;
a first numerical control switch unit disposed between the direct current input end and the primary side of the isolation transformer, the first numerical control switch unit generating alternating current on the primary side of the isolation transformer by being turned on or off;
a wireless coil module connected to a secondary side of the isolation transformer, and externally outputting alternating current energy required for wireless charging;
an information extraction unit connected to the isolation transformer and configured for extraction isolation, filtering, and conditioning current information of the transformer, and acquiring and transmitting corresponding real-time information to a processor unit;
the processor unit connected to the first numerical control switch unit and the information extraction unit, respectively; the processor unit acquiring a control signal from the real-time information and controlling the first numerical control switch unit to work.

In which, a preferred solution is that the first numerical control switch unit comprises a first numerical control switch disposed between the direct current input end and the primary side of the isolation transformer, and a first numerical control driving module connected to the processor unit which generates a switching frequency signal, switching duty ratio information and a power adjustment signal, and the first numerical control driving module drives the first numerical control switch to be turned on or off according to the signal.

In which, a preferred solution is that both the processor unit and the information extraction unit are disposed on the secondary side of the isolation transformer; the output device for wireless charging further comprises an isolated signal transmission unit which is connected to the isolation transformer, the processor unit and the first numerical control driving module, respectively, and configured to transmit the switching frequency signal, the switching duty ratio information and the power adjustment signal from the secondary side of the isolation transformer to the first numerical control driving module on the primary side.

In which, a preferred solution is that both the processor unit and the information extraction unit are disposed on the primary side of the isolation transformer; the first numerical control switch unit comprises a first numerical control switch connected to the processor unit which generates a switching frequency signal, switching duty ratio information and a power adjustment signal, and the processor unit drives the first numerical control switch to be turned on or off according to the signal.

In which, a preferred solution is that the first numerical control driving module comprises a power-on driving module including a preset driving signal; when just being powered on while not receiving the switching frequency signal and the switching duty ratio information, the power-on driving module drives the first numerical control switch to be turned on or off according to the preset driving signal.

In which, a preferred solution is that the direct current input end is a rectification energy-storage module that comprises a capacitor; an input end of the rectification energy-storage module is connected to power frequency alternating current, and an output end of the rectification energy-storage module is connected to the primary side of the isolation transformer; and the rectification energy-storage module is configured to rectify the power frequency alternating current into direct current and store the direct current in the capacitor.

In which, a preferred solution is that the output device for wireless charging further comprises an alternating current power connector above 1 Khz, and an alternating current power transmission cable above 1 Khz; the alternating current power connector above 1 Khz is disposed to be connected to the secondary side of the isolation transformer and the alternating current power transmission cable above 1 Khz, respectively; the alternating current power transmission cable above 1 Khz is connected to the wireless coil module, and configured to enable the isolation transformer to generate alternating current easy for a long-distance transmission, and transmit the alternating current to the wireless coil module at a long distance.

In which, a preferred solution is that the output device for wireless charging comprises a numerical control gate switch and an isolation transformer secondary side second rectification voltage-stabilization module; the numerical control gate switch is connected to the secondary side of the isolation transformer, the isolation transformer secondary side second rectification voltage-stabilization module, the processor unit, and the wireless coil module, respectively; the processor unit generates and transmits a selection signal to the numerical control gate switch; and the numerical control gate switch transmits alternating current output from the secondary side of the isolation transformer to the isolation transformer secondary side second rectification voltage-stabilization module or the wireless coil module according to the selection signal; the isolation transformer secondary side second rectification voltage-stabilization module is configured to rectify the alternating current into direct current and store the same, and output the direct current to a direct current power receiving device.

In which, a preferred solution is that the output device for wireless charging further comprises a second numerical control switch and an alternating current-direct current power connector; the second numerical control switch is connected to the isolation transformer secondary side second rectification voltage-stabilization module, the alternating current-direct current power connector, and the processor unit, respectively; the second numerical control switch is turned on or off by the processor unit; and the alternating current-direct current power connector is configured to output alternating current and direct current and connected to the wireless coil module or the direct current power receiving device.

In which, a preferred solution is that a filtering unit is further comprised between the direct current input end and the primary side of the isolation transformer; the filtering unit is a high-pass filter or an envelope filtering circuit, and configured to filter ripples above 10 Hz and below 10 Khz on the direct current input end, thereby avoiding a crosstalk to the secondary side of the isolation transformer and a generation of noise interference on the information extraction unit.

### Advantageous Effects of the Invention

### Advantageous Effects

The present invention has the following advantageous effects: as compared with the prior art, by designing a output device for wireless charging , the present invention eliminates the traditional large-volume, high-power and high-cost modules and simplifies the circuit, thereby reducing the power loss, improving the overall efficiency of the output device for wireless charging , while greatly reducing the cost and the product volume. In addition, the cooperation of the first numerical control switch unit, the information extraction unit and the processor unit achieves the purpose of improving the efficiency, reducing the cost and volume, filtering the external noise and avoiding the generation of interference signals.

### Brief Description of the Drawings

The present invention will be further described as follows in conjunction with the drawings and the embodiments. In the drawings:
Fig. 1 is a schematic circuit structure diagram of a output device for wireless charging in the present invention;
Fig. 2 is a schematic circuit structure diagram of a output device for wireless charging having an alternating current power transmission cable above 1 Khz;
Fig. 3 is a schematic circuit structure diagram of a output device for wireless charging having a numerical control gate switch in the present invention;
Fig. 4 is a schematic circuit structure diagram of a output device for wireless charging having a second numerical control switch in the present invention;
Fig. 5 is a schematic circuit structure diagram of a output device for wireless charging having a high-pass filter in the present invention;
Fig. 6 is a schematic circuit structure diagram of a output device for wireless charging having an envelop filtering circuit in the present invention;
Fig. 7 is a schematic circuit structure diagram of another embodiment of a output device for wireless charging in the present invention.

### Detailed Description of the Invention

### Optimal embodiments for implementing the present invention

### Optimal embodiments of the present invention

### tm^

Now preferred embodiments of the present invention are described in detail with reference to the drawings.

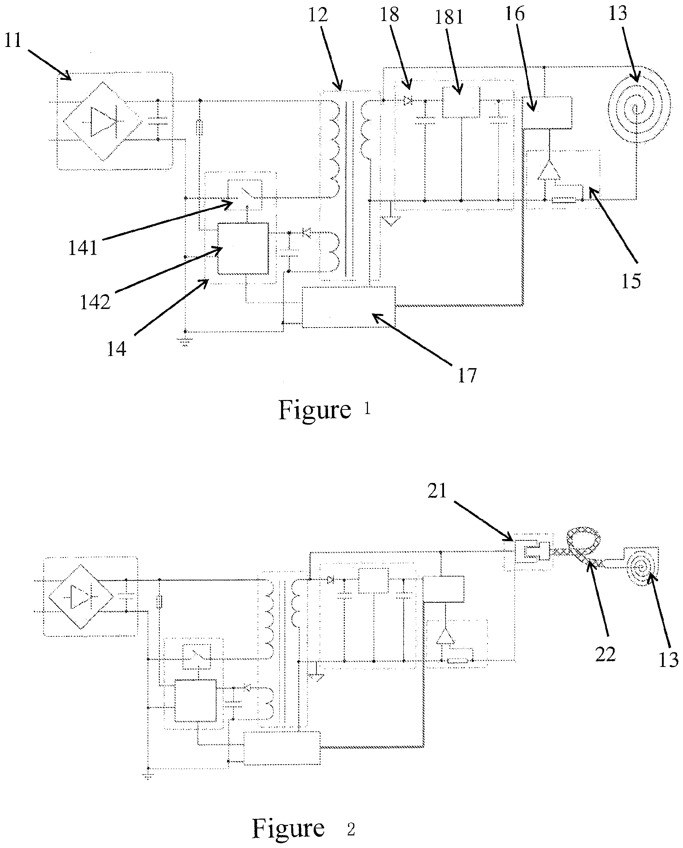

As shown in Fig. 1, the present invention provides a preferred embodiment of a output device for wireless charging .

A output device for wireless charging , comprising a direct current input end, an isolation transformer 12, a wireless coil module 13, a first numerical control switch unit 14, an information extraction unit 15 and a processor unit 16, wherein the direct current input end is connected to a primary side of the isolation transformer 12, the wireless coil module 13 is connected to a secondary side of the isolation transformer 12, the first numerical control switch unit 14 is disposed between the direct current input end and the primary side of the isolation transformer 12, the information extraction unit 15 is connected to the isolation transformer 12, and the processor unit 16 is connected to the first numerical control switch unit 14 and the information extraction unit 15, respectively. The detailed description is given as follows:

The direct current input end in this embodiment is configured to input direct current II, which is converted into alternating current V1 above 1 Khz by the first numerical control switch unit 14 and inputted into the primary side of the isolation transformer 12.

Further, the direct current input end is a rectification energy-storage module 11 that comprises a capacitor C1; an input end of the rectification energy-storage module 11 is connected to power frequency alternating current V0, and an output end of the rectification energy-storage module 11 is connected to the primary side of the isolation transformer 12; the rectification energy-storage module 11 is configured to rectify the power frequency alternating current V0 into direct current II which is temporarily stored in the capacitor C1. In which, two ends of the rectification energy-storage module 11 are connected to two ends of the primary side of the isolation transformer 12, respectively, and the capacitor C1 is connected in parallel with the two ends of the rectification energy-storage module 11.

The primary side of the isolation transformer 12 in this embodiment is connected to the alternating current V1 above 1 Khz, and the secondary side thereof outputs alternating current V2 above 1 Khz; the isolation transformer 12 refers to a transformer with an input winding electrically isolated from an output winding, the isolation transformer 12 is configured to avoid accidentally contacting charged bodies simultaneously, and an isolation of the transformer is to isolate currents of the coils of the primary and secondary sides from each other.

Further, the isolation transformer 12 has a plurality of windings, one of which provides energy to the first numerical control switch unit 14; wires in the plurality of windings are realized by a plurality of stranded enameled wires or flat cables which reduce a skin effect above 1 Khz, and a radius of the enameled wire or half of a thickness of the flat cable is less than a skin depth at a set upper limit working frequency.

The first numerical control switch unit 14 in this embodiment is disposed between the direct current input end and the primary side of the isolation transformer 12, and the first numerical control switch unit 14 generates alternating current V1 above 1 Khz on the primary side of the isolation transformer 12 by being turned on or off.

Further, the first numerical control switch unit 14 comprises a first numerical control switch 141 disposed between the direct current input end and the primary side of the isolation transformer 12, and a first numerical control driving module 142 connected to the processor unit 16 which generates a control signal including a switching frequency signal, switching duty ratio information and a power adjustment signal, and the first numerical control driving module 142 drives the first numerical control switch 141 to be turned on or off according to the control signal. In which, the first numerical control switch 141 is disposed at one end of the direct current input end and one end of the primary side of the isolation transformer 12, preferably in an input end of the direct current input end and an output end of the primary side of the isolation transformer 12.

Further, the first numerical control driving module 142 comprises a power-on driving module including a preset driving signal; when just being powered on while not receiving the switching frequency signal and the switching duty ratio information, the power-on driving module drives the first numerical control switch 141 to be turned on or off according to the preset driving signal. Specifically, 1. after a time width, in which the processor unit 16 does not output the switching frequency signal and the switching duty ratio information, exceeds a preset time T1, the power-on driving module itself outputs a frequency F1 to the first numerical control switch 141 according to the preset driving signal, so as to drive the first numerical control switch 141 to work; and 2. when the processor unit 16 has outputted the switching frequency signal and the switching duty ratio information to the power-on driving module, the power-driven driving module drives the first numerical control switch 141 to work, according to the switching frequency signal and the switching duty ratio information outputted by the processor unit 16.

Preferably, the driving signal is a high-low level signal, a frequency-division high-low level signal, or a digitally decoded high-low level signal of the same frequency and the same duty ratio as the signal output by the processor unit 16.

The electric energy of the power-on driving module is supplied from the direct current input end or energy outputted by rectification at the primary side of the isolation transformer 12.

The wireless coil module 13 in this embodiment is connected to the secondary side of the isolation transformer 12, and externally outputs alternating current V2 above 1 Khz required for wireless charging.

The information extraction unit 15 in this embodiment is connected to the isolation transformer 12, and configured for extraction isolation, filtering, and conditioning current information on the transformer, and acquiring and transmitting corresponding real-time information to the processor unit 16.

Specifically, the information extraction unit 15 is implemented by a sampling sensor, such as a resistor or a filtering and signal conditioning circuit, and capable of extracting an alternating current signal and an average direct current signal from the secondary side of the isolation transformer 12, sensing a power adjustment digital signal of an external wireless device from the wireless coil module 13, and transmitting the signals to the processor unit 16.

The processor unit 16 in this embodiment is connected to the first numerical control switch unit 14 and the information extraction unit 15, respectively, so as to acquire a control signal from real-time information and control the first numerical control switch unit 14 to work.

In which, the processor unit 16 includes the following functions: 1. monitoring an output voltage of the secondary side of the isolation transformer 12; 2. reading a signal output from the information extraction unit 15; 3. decoding the power adjustment digital signal; 4. calculating the current output power and the power to be output next; 5. driving an isolated signal transmission unit to output a power control signal; 6. driving the isolated signal transmission unit to transmit a communication signal to the external wireless charging device; 7. generating a detection signal for the external wireless charging device; 8. determining whether there is any external wireless charging device; and 9. determining whether there is any metal foreign matter.

Both the processor unit 16 and the information extraction unit 15 are disposed on the secondary side of the isolation transformer 12; the output device for wireless charging further comprises an isolated signal transmission unit which is connected to the isolation transformer 12, the processor unit 16 and the first numerical control driving module 142, respectively, and configured to transmit a control signal from the secondary side of the isolation transformer 12 to the first numerical control driving module 142 on the primary side.

Preferably, the isolated signal transmission unit is any one of a digital optical coupling device, a capacitor C1 or a digital magnetic coupling device.

In this embodiment, the output device for wireless charging further comprises an isolation transformer secondary-side first rectification voltage-stabilization module 18, and a power rectification voltage-stabilization module is connected to the secondary side of the isolation transformer 12; the isolation transformer secondary-side first rectification voltage-stabilization module 18 comprises a rectification voltage-stabilization circuit 181 and its external circuit; and the isolation transformer secondary-side first rectification voltage-stabilization module 18 is configured to perform rectification and voltage stabilization for the output of the secondary side of the isolation transformer 12 to produce a set direct current voltage which is transmitted to the processor unit 16 to power the same.

In this embodiment, the output device for wireless charging includes two working modes.

### Working mode 1: power receiving device detection state

Under the power receiving device detection state, the processor unit 16 controls the wireless coil module 13 to generate a detection signal, and if a signal fed back by the information extraction unit 15 within a set time width T2 causes the processor unit 16 to determine that there is no external device, the processor unit 16 will wait for a time T2' according to a setting, and then restart the detection.

### Working mode 2: power output state

Under a detection mode, when a signal fed back by the information extraction unit 15 causes the processor unit 16 to determine that there is an external device which is placed within a sensing range of the wireless coil module 13, the processor unit 16 controls the output device for wireless charging to enter a power output state, and attempts to perform a communication with the external device; after the communication is successful, the processor unit 16 confirms that the external device is a wireless charging input device, and wirelessly charges the wireless charging input device according to a protocol.

When the wireless charging input device is not existed or is removed, the processor unit 16 re-controls the output device for wireless charging to enter the power receiving device detection state.

As shown in Fig. 2, the present invention provides a preferred embodiment of a output device for wireless charging having a power transmission cable above 1 Khz.

The output device for wireless charging further comprises an alternating current power connector 21 above 1 Khz and an alternating current power transmission cable 22 above 1 Khz; the alternating current power connector 21 above 1 Khz is disposed to be connected to the secondary side of the isolation transformer 12 and the alternating current power transmission cable 22 above 1 Khz, respectively; the alternating current power transmission cable 22 above 1 Khz is connected to the wireless coil module 13, and configured to enable the isolation transformer 12 to generate alternating current V2 above 1 Khz easy for long-distance transmission, and transmit the alternating current V2 above 1 Khz to the wireless coil module 13 at a long distance with a low loss. In which, the alternating current power transmission cable 22 above 1 Khz has the characteristics of extremely low transmission loss of alternating current energy above 1 Khz.

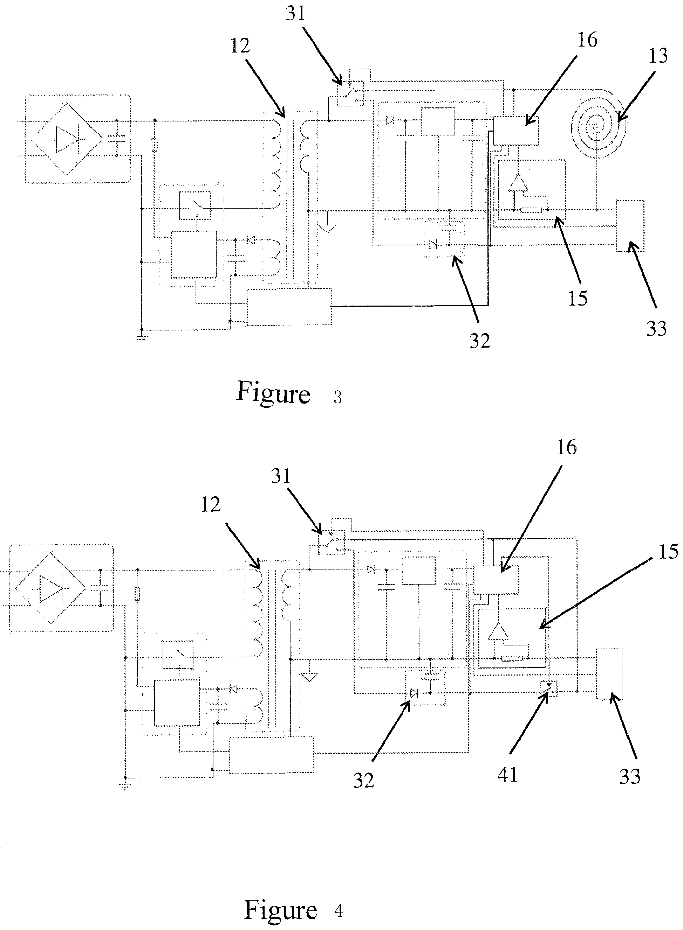

As shown in Fig. 3, the present invention provides a preferred embodiment of a output device for wireless charging having a numerical control gate switch.

The output device for wireless charging comprises a numerical control gate switch 31 and an isolation transformer secondary side second rectification voltage-stabilization module 32; the numerical control gate switch 31 is connected to the secondary side of the isolation transformer 12, the isolation transformer secondary side second rectification voltage-stabilization module 32, the processor unit 16 and the wireless coil module 13, respectively; the processor unit 16 generates and transmits a selection signal to the numerical control gate switch 31; the numerical control gate switch 31 transmits the alternating current V2 above 1 Khz output from the secondary side of the isolation transformer 12 to the isolation transformer secondary side second rectification voltage-stabilization module 32 or the wireless coil module 13 according to the selection signal; the isolation transformer secondary side second rectification voltage-stabilization module 32 is configured to rectify the alternating current V2 above 1 Khz into direct current 12 above 1 Khz and store the same, and output the direct current to the direct current power receiving device.

In which, the isolation transformer secondary side second rectification voltage-stabilization module 32 outputs the direct current 12 above 1 Khz into the processor unit, and the processor unit 16 monitors in real time a voltage signal of the direct current 12 above 1 Khz of the isolation signal secondary side second rectification voltage-stabilization module 32.

Further, the output device for wireless charging further comprises an alternating current-direct current power connector 33 which is configured to output the alternating current V2 above 1 Khz and the direct current 12 above 1 Khz with low losses, and connected to the wireless coil module 13 or a direct current power receiving device. In which, the alternating current-direct current power connector 33 comprises a plurality of communication ports connected to the processor unit 16.

Further, a common input end of the numerical control gate switch 31 is connected to an alternating current output end of the secondary side of the isolation transformer 12; a first output end of the numerical control gate switch 31 is connected to the alternating current input end of the wireless coil module 13, a second output end of the numerical control gate switch 31 is connected to an input end of the isolation transformer secondary side second rectification voltage-stabilization module 32, a control signal input end of the numerical control gate switch 31 is connected to the processor unit 16, and the processor unit 16 determines an output end to which the common input end of the numerical control gate switch 31 is electrically connected.

In this embodiment, the output device for wireless charging includes two working modes.

### Working mode 1: power receiving device alternative detection state:

In the power receiving device alternative detection state, the processor unit 16 controls the numerical control gate switch 31 to switch the output according to the setting time division; at a certain moment, the numerical control gate switch 31 outputs to the wireless coil module 13, and the processor unit 16 controls the output device for wireless charging to send a signal indicative of presence or absence of an external device through the wireless coil module 13.

Within the set time width T2, if the processor unit 16 determines, from the signal fed back by the signal extraction unit, that there is no external device placed near the wireless charging coil module, the processor unit 16 controls the numerical control gate switch 31 to switch the output to the isolation transformer secondary side second rectification voltage-stabilization module 32, and then controls the output device for wireless charging to generate a set direct current voltage at the isolation transformer secondary side second rectification voltage-stabilization module 32.

Within the set time width T3, if the signal fed back by the signal extraction unit, or a voltage variation signal of the output end of the isolation transformer secondary side second rectification voltage-stabilization module 32, or a signal communication interface of the alternating current-direct current power connector 33 notifies the processor unit 16 that a direct current power receiving device occurs, the processor unit 16 determines that no direct current power receiving device is connected to the output end of the isolation transformer secondary side second rectification voltage-stabilization module 32, and then re-controls the numerical control gate switch 31 to output to the wireless coil module 13.

The above alternative detection process is repeated.

### Working mode 2: power output state:

During the detection of the external device by the wireless coil module 13, if the processor unit 16 determines that an external device occurs within a sensing range of the wireless coil module 13, the processor unit 16 maintains the output connection state of the numerical control gate switch 31, and the output device for wireless charging switches to the power output state according to the setting, thereby starting to attempt a wireless charging output power supply in a set mode.

During the detection of the direct current power receiving device by the isolation transformer secondary side second rectification voltage-stabilization module 32 or the signal extraction unit, if the processor unit 16 determines that the output end is connected to a direct current power receiving device, the processor unit 16 maintains the output connection state of the numerical control gate switch 31, and controls the output device for wireless charging to switch to the power output state according to the setting, thereby starting to attempt a direct current power supply in a set mode.

The processor unit 16 may also finely adjust the output voltage value VI of the isolation transformer secondary side second rectification voltage-stabilization module 32 according to the current signal fed back by the signal extraction unit, to offset the direct current cable loss when the isolating transformer secondary side second rectification voltage-stabilization module 32 outputs to the direct current power receiving device, thereby achieving the purpose that the voltage of the direct current power receiving device is close or equal to a target voltage. The processor unit 16 may also adjust the voltage value VI output from the isolation transformer secondary side second rectification voltage-stabilization module 32 according to information fed back by the signal communication port of the alternating current-direct current power connector 33, so as to meet the design requirement of the power receiving device.

When determining that the power receiving device has been removed, the processor unit 16 controls the output device for wireless charging to return to the power receiving device alternative detection state.

As shown in Fig. 4, the present invention provides a preferred embodiment of a output device for wireless charging having a second numerical control switch.

The output device for wireless charging further comprises a second numerical control switch 41 connected to the isolation transformer secondary side second rectification voltage-stabilization module 32, the alternating current-direct current power connector 33, and the processor unit 16, respectively; the second numerical control switch 41 is turned on or off by the processor unit 16; the alternating current-direct current power connector 33 is configured to output the alternating current V2 above 1 Khz and the direct current 12 above 1 Khz, and connected to the wireless coil module 13 or the direct current power receiving device.

The input end of the alternating current-direct current power connector 33 is connected to the common output end of the second numerical control switch 41, the output end of the alternating current-direct current power connector 33 is connected to the information extraction unit 15, and the alternating current-direct current power connector 33 further comprises a plurality of communication ports connected to the processor unit 16. The first input end of the second numerical control switch 41 is connected to the output end of the secondary side of the isolation transformer 12, and the second input end of the second numerical control switch 41 is connected to the output end of the isolation transformer secondary side second rectification voltage-stabilization module 32. The input end of the numerical control gate switch 31 is connected to the output end of the secondary side of the isolation transformer 12, and the output end of the numerical control gate switch 31 is connected to the input end of the isolation transformer secondary side second rectification voltage-stabilization module 32. Both the numerical control gate switch 31 and the second numerical control switch 41 are controlled by the processor unit 16.

In this embodiment, the output device for wireless charging includes three working modes.

### Working mode 1: output mode determination state

When the output device for wireless charging does not externally output any power, the information extraction unit 15 feeds back corresponding signal to the processor unit 16; at that time, the processor unit 16 controls the output device for wireless charging to enter the output mode determination state, and defaults it as an external device detection state under a direct current supply mode, while controlling the numerical control gate switch 31 to be turned on, and the common output end of the second numerical control switch 41 to be connected to the second input end, and controlling the output device for wireless charging to output a preset voltage V1= on the isolation transformer secondary side second rectification voltage-stabilization module 32.

In the output mode determination state, if a dedicated wireless coil module 13 is inserted into the alternating current-direct current power connector 33, the information extraction unit 15 generates a signal S1, which meets a predetermined setting, for the processor unit 16, or notifies the processor unit 16 through the communication port of the alternating current-direct current power connector 33, so that the processor unit 16 switches the working mode of the output device for wireless charging to a wireless charging energy output mode, and enters an external device detection state under corresponding wireless charging mode. If the information extraction unit 15 generates another signal S2, which meets the predetermined setting, for the processor unit 16, or notifies the processor unit 16 through the communication port of the alternating current-direct current power connector 33, the processor unit 16 switches the working mode of the output device for wireless charging to a direct current energy output mode, and enters an external device detection state under corresponding direct current supply mode.

### Working mode 2: power receiving device detection state and power output state under direct current supply mode

In the external device detection state under the direct current supply mode, if the output end of the alternating current-direct current power connector 33 is connected to a direct current power receiving device, the information extraction unit 15 generates a signal S3, which meets the predetermined setting, for the processor unit 16, or a voltage value variation signal output from the system on the isolation transformer secondary side second rectification voltage-stabilization module 32 exceeds a preset value VT1, or the processor unit 16 is notified through the communication port of the alternating current-direct current power connector 33, and the processor unit 16 will switch the output device for wireless charging to a power output state of outputting direct current energy.

### Working mode 3: power receiving device detection state and power output state under wireless charging mode

When the output device for wireless charging is in the external device detection state under the wireless charging mode, the processor unit 16 controls the output device for wireless charging to send a detection signal according to a setting; if the information extraction unit 15 generates a valid detection result signal to remind the processor unit 16 that there is an external device near the wireless charging output coil module, the processor unit 16 controls the output device for wireless charging to enter the power output state of wireless charging, and attempts to perform a wireless charging output power supply in a set mode.

When the dedicated wireless coil module 13 is removed, the information extraction unit 15 generates a corresponding signal in the external device detection state or the power output state, and the processor unit 16 controls the output device for wireless charging to return to the defaulted external device detection state under the direct current supply mode.

In this embodiment, the output device for wireless charging includes two working modes, wherein the first is a wireless charging output mode, and the second is a direct current supply output mode:
When the wireless coil module 13 starts to work, the first numerical control switch 141 is controlled according to a predetermined setting in an initial state to generate required alternating current V2 above 1 Khz on the secondary side of the isolation transformer 12; at the same time, the first numerical control gate switch 31 is controlled to gate the second output end, while the second numerical control switch 41 is turned on, and the processor unit 16 reads in real time the signal fed back by the signal extraction unit.

When the alternating current-direct current power connector 33 is electrically connected to the wireless coil module 13, the wireless coil module 13 feeds back a first valid signal, so that the processor unit 16 controls the first numerical control gate switch 31 to gate the first output end; at the same time, the second numerical control switch 41 is turned off, and the processor unit 16 controls the wireless coil module 13 to enter the wireless charging working mode to supply energy to the wireless charging input device; the first valid signal includes a pulse signal generated on the signal extraction unit, and an identification signal transmitted through a second signal communication port of the alternating current-direct current power connector 33.

When the alternating current-direct current power connector 33 is electrically disconnected from the wireless coil module 13, the processor unit 16 does not receive the first valid signal, so that the processor unit 16 controls the wireless coil module 13 to return to the initial state.

When the alternating current-direct current power connector 33 is electrically connected to the direct current power receiving device, the signal extraction unit, the isolation transformer secondary side second rectification voltage-stabilization module 32 or the alternating current-direct current power connector 33 provides a second valid signal to the processor unit 16; the processor unit 16 maintains the current states of the first numerical control gate switch 31 and the second numerical control switch 41, and controls, according to a predetermined setting, the wireless coil module 13 to enter the direct current supply output mode to supply power to the direct current power receiving device; the second valid signal includes a current variation signal generated on the signal extraction unit, a voltage variation signal generated at the output end of the isolation transformer secondary side second rectification voltage- stabilization module 32, and an identification signal transmitted through a signal communication port of the alternating current-direct current power connector 33.

When the alternating current-direct current power connector 33 is electrically disconnected from the direct current power receiving device, the processor unit 16 does not receive the second valid signal, so that the processor unit 16 controls the wireless coil module 13 to return to the initial state.

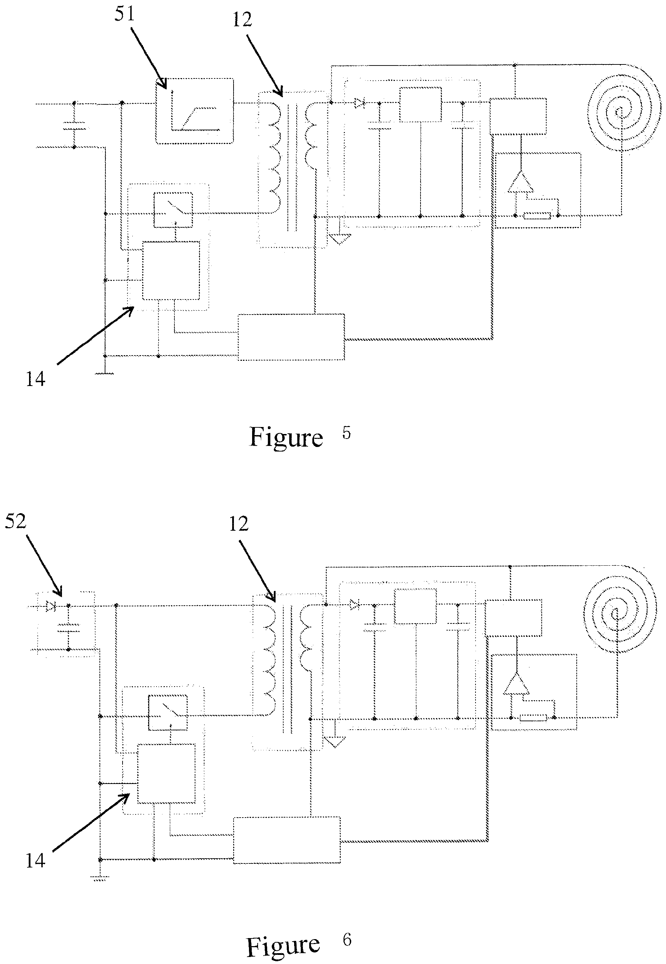

As shown in Figs. 5 and 6, the present invention provides a preferred embodiment of a output device for wireless charging having a filtering unit.

A filtering unit is further comprised between the direct current input end and the primary side of the isolation transformer 12; the filtering unit is a high-pass filter 51 or an envelope filtering circuit 52 and configured to filter ripples above 10 Hz and below 10 Khz on the direct current input end, thereby avoiding a crosstalk to the secondary side of the isolation transformer 12 and a generation of noise interference on the information extraction unit 15.

In which, the high-pass filter 51 is connected in series between the direct current input end and the primary side of the isolation transformer 12; the envelope filtering circuit 52 comprises a diode and a capacitor.

The filtering unit further comprises a common mode/differential mode low-pass filter.

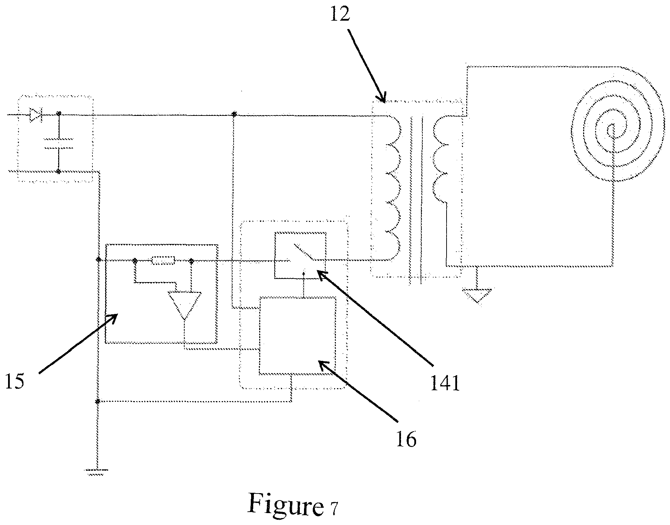

As shown in Fig. 7, the present invention provides a preferred embodiment of a output device for wireless charging .

Further, both the processor unit 16 and the information extraction unit 15 are disposed on the primary side of the isolation transformer 12; the first numerical control switch unit 14 comprises a first numerical control switch 141 connected to the processor unit 16; the processor unit 16 generates a control signal including a switching frequency and switching duty ratio information, and drives the first numerical control switch 141 to be turned on or off according to the control signal.

Those described above are just optimal embodiments of the present invention, rather than limitations to the scope of the present invention. Any equivalent change or modification made based on the patent claims of the present invention should be covered by the present invention.

## Claims

1. A output device for wireless charging, **characterized by** comprising:
a direct current input end;
an isolation transformer having a primary side connected to the direct current input end;
a first numerical control switch unit disposed between the direct current input end and the primary side of the isolation transformer, the first numerical control switch unit generating alternating current on the primary side of the isolation transformer by being turned on or off;
a wireless coil module connected to a secondary side of the isolation transformer, and externally outputting alternating current energy required for wireless charging;
an information extraction unit connected to the isolation transformer and configured for extraction isolation, filtering, and conditioning current information of the transformer, and acquiring and transmitting corresponding real-time information to a processor unit;
the processor unit connected to the first numerical control switch unit and the information extraction unit, respectively; the processor unit acquiring a control signal from the real-time information and controlling the first numerical control switch unit to work.

2. The output device for wireless charging according to claim 1, **characterized in that** the first numerical control switch unit comprises a first numerical control switch disposed between the direct current input end and the primary side of the isolation transformer, and a first numerical control driving module connected to the processor unit which generates a switching frequency signal, switching duty ratio information and a power adjustment signal, and the first numerical control driving module drives the first numerical control switch to be turned on or off according to the signal.

3. The output device for wireless charging according to claim 2, **characterized in that** both the processor unit and the information extraction unit are disposed on the secondary side of the isolation transformer; the output device for wireless charging further comprises an isolated signal transmission unit which is connected to the isolation transformer, the processor unit and the first numerical control driving module, respectively, and configured to transmit the switching frequency signal, the switching duty ratio information and the power adjustment signal from the secondary side of the isolation transformer to the first numerical control driving module on the primary side.

4. The output device for wireless charging according to claim 1, **characterized in that** both the processor unit and the information extraction unit are disposed on the primary side of the isolation transformer; the first numerical control switch unit comprises a first numerical control switch connected to the processor unit which generates a switching frequency signal, switching duty ratio information and a power adjustment signal, and the processor unit drives the first numerical control switch to be turned on or off according to the signal.

5. The output device for wireless charging according to claim 2, **characterized in that** the first numerical control driving module comprises a power-on driving module including a preset driving signal; when just being powered on while not receiving the switching frequency signal and the switching duty ratio information, the power-on driving module drives the first numerical control switch to be turned on or off according to the preset driving signal.

6. The output device for wireless charging according to claim 1, **characterized in that** the direct current input end is a rectification energy-storage module that comprises a capacitor; an input end of the rectification energy-storage module is connected to power frequency alternating current, and an output end of the rectification energy-storage module is connected to the primary side of the isolation transformer; and the rectification energy-storage module is configured to rectify the power frequency alternating current into direct current and store the direct current in the capacitor.

7. The output device for wireless charging according to claim 1, **characterized in** further comprising an alternating current power connector above 1 Khz, and an alternating current power transmission cable above 1 Khz; the alternating current power connector above 1 Khz is disposed to be connected to the secondary side of the isolation transformer and the alternating current power transmission cable above 1 Khz, respectively; the alternating current power transmission cable above 1 Khz is connected to the wireless coil module, and configured to enable the isolation transformer to generate alternating current easy for a long-distance transmission, and transmit the alternating current to the wireless coil module at a long distance.

8. The output device for wireless charging according to claim 1, **characterized in** comprising a numerical control gate switch and an isolation transformer secondary side second rectification voltage-stabilization module; the numerical control gate switch is connected to the secondary side of the isolation transformer, the isolation transformer secondary side second rectification voltage-stabilization module, the processor unit, and the wireless coil module, respectively; the processor unit generates and transmits a selection signal to the numerical control gate switch; and the numerical control gate switch transmits alternating current output from the secondary side of the isolation transformer to the isolation transformer secondary side second rectification voltage-stabilization module or the wireless coil module according to the selection signal;
the isolation transformer secondary side second rectification voltage-stabilization module is configured to rectify the alternating current into direct current and store the same, and output the direct current to a direct current power receiving device.

9. The output device for wireless charging according to claim 8, **characterized in** further comprising a second numerical control switch and an alternating current-direct current power connector; the second numerical control switch is connected to the isolation transformer secondary side second rectification voltage-stabilization module, the alternating current-direct current power connector, and the processor unit, respectively; the second numerical control switch is turned on or off by the processor unit; and the alternating current-direct current power connector is configured to output alternating current and direct current and connected to the wireless coil module or the direct current power receiving device.

10. The output device for wireless charging according to claim 1, **characterized in that** a filtering unit is further comprised between the direct current input end and the primary side of the isolation transformer; the filtering unit is a high-pass filter or an envelope filtering circuit, and configured to filter ripples above 10 Hz and below 10 Khz on the direct current input end, thereby avoiding a crosstalk to the secondary side of the isolation transformer and a generation of noise interference on the information extraction unit.
